# EUROPÄISCHE PATENTANMELDUNG

(11) **EP 2 220 978 A2**
(43) Veröffentlichungstag der Anmeldung: **25.08.2010**
(21) Anmeldenummer: 10000691.5
(22) Anmeldetag: 25.01.2010
(51) Int. Cl.: A47J 42/08

(54) **Vorrichtung zum Zerkleinern zumindest eines Mahlgutes**

(30) Priorität: 30.01.2009 DE 102009006917
(71) Anmelder: Alfers, Harald, 63263 Neu-Isenberg (DE)
(72) Erfinder: Die Erfindernennung liegt noch nicht vor

(57) **Zusammenfassung**

Die Erfindung betrifft eine Vorrichtung, insbesondere Mühle (1), zum Zerkleinern zumindest eines Mahlgutes, mit zumindest einem Gehäusekörper (2), einem in dem Gehäusekörper ausgebildeten Reservoir (4) zur Aufnahme des zu zerkleinernden Mahlgutes, wobei das Reservoir (4) durch eine zumindest bereichsweise in dem Gehäusekörper (2) aufgenommene Magazinhülse (14) gebildet ist, und zumindest einem Mahlwerk (5) zur Zerkleinerung des Mahlgutes, wobei das Mahlwerk (5) zumindest eine erste Mahlwerkskomponente (11) und zumindest eine relativ zu der ersten Mahlwerkskomponente (11) bewegbare und durch zumindest einen Mahlspalt von der ersten Mahlwerkskomponente (16) beabstandete zweite Mahlwerkskomponente umfasst und die Magazinhülse sich im wesentlichen über die gesamte Ausdehnung des Reservoirs in dem Gehäusekörper erstreckt, die zweite Mahlwerkskomponente mitnahmesicher mit der Magazinhülse und die erste Mahlwerkskomponente mitnahmesicher mit zumindest einer Achse (15) verbunden ist und die Magazinhülse (14) zur Veränderung zumindest einer geometrischen Abmessung des Mahlspaltes (12) relativ zu dem Gehäusekörper (2) bewegbar ist.

## Beschreibung

### Erfindungsgebiet

Die Erfindung betrifft eine Vorrichtung, insbesondere Mühle, zum Zerkleinern zumindest eines Mahlguts, mit zumindest einem Gehäusekörper, einem in dem Gehäusekörper ausgebildeten Reservoir zur Aufnahme des zu zerkleinernden Mahlguts, wobei das Reservoir durch eine zumindest bereichsweise in dem Gehäusekörper aufgenommene Magazinhülse gebildet ist, und zumindest einem Mahlwerk zur Zerkleinerung des Mahlguts, wobei das Mahlwerk zumindest eine erste Mahlwerkskomponente und zumindest eine relativ zu der ersten Mahlwerkskomponente bewegbare und durch zumindest einen Mahlspalt von der ersten Mahlwerkskomponente beabstandete zweite Mahlwerkskomponente umfasst.

### Hintergrund der Erfindung

Es sind bereits Vorrichtungen, insbesondere Justiervorrichtungen, bei Mühlen bekannt, bei denen ein gezielter Einfluss auf eine Körnigkeit eines Mahlguts, wie eines Gewürzes, möglich ist. Im Wesentlichen findet dieses auf drei unterschiedliche Weisen statt, nämlich durch Verwendung einer verstellbaren Hutmutter, durch die ein Mahlwerkspalt verändert wird, die Verwendung eines in einen Mahlwerk integrierten Justierrings, durch die der Mahlspalt verändert wird bzw. die Anordnung eines getrennten Justierrings in einem unteren Bereich einer Mühle.

Zum einen erfolgt bei den aus dem Stand der Technik bekannten Vorrichtungen die Veränderung eines Mahlspalts, beziehungsweise eine Veränderung einer Eintauchtiefe eines Mahlkegels in einen Mahlring, durch ein mehr oder weniger starkes Anziehen einer Hutmutter, die sich an einem antriebsseitigen Ende einer Mahlspindel befindet. Diese Hutmutter fixiert ebenfalls einen mit der Spindel drehfest verbundenem Mühlenkopf bzw. eine Antriebskurbel mit einem eigentlichen Mühlenkörper bzw. Mühlengehäuse. Bei einer Befüllung der Mühle ist die Hutmutter vollständig zu lösen und der Mühlenkopf, der auch als Deckel dient, axial vom restlichen Mühlenkörper abzuheben. Beispielsweise offenbaren die AT 401 339 B, EP 0 992 208 A1 und DE 20 2006 001 997 U1 derartige Mühlen. Diese Mühlen weisen jedoch folgende Nachteile auf:

Bei einer Befüllung der Mühle senkt sich die Spindel mit dem Mahlkegel ab, was zu einer Vergrößerung des Mahlspalts führt, und es können einzelne Gewürzkörner in den Mahlspalt gelangen. Das in dem Mahlspalt befindliche Mahlgut verhindert jedoch eine anschließende Verkleinerung des Mahlspalts und ein Anziehen der Hutmutter zur Verkleinerung des Mahlspalts nach einer Befüllung wird erschwert. Weiterhin ist eine erneute Justierung nach jeder Befüllung notwendig. In der Regel kann die erwünschte Mahlstärke nur nach mehrfachen Mahlversuchen eingestellt werden. Eine direkte Ablesbarkeit des Mahlgrads ist hier nicht gegeben.

Eine weitere Möglichkeit der gezielten Einflussnahme auf die Größe eines Mahlspalts bzw. auf eine Körnigkeit eines Mahlguts ist in der DE 197 41 632 A1 näher erläutert. Hierbei erfolgt eine Justierung einer Eintauchtiefe eines Mahlkegels in einen Mahlring eines Mahlwerks direkt an dem Mahlwerk und somit am Fuße eines Mühlenkörpers. Ein Mahlring ist fest mit dem Mühlenkörper verbunden, während ein Einstellring mechanisch mit dem Mahlkegel verbunden ist. Der Einstellring ist über ein Gewinde drehbar an dem Mühlenkörper gelagert. Durch Drehung des Einstellrings wird eine axiale Lage des Mahlkegels durch die Steigung des Gewindes verändert, also eine unterschiedlich justierbare Eintauchtiefe, dies bedeutet, wie tief der Mahlkegel in den Mahlring bzw. Mahlspalt eintaucht, durch einen mechanischen Einfluss auf die relative Stellung des Mahlrings zum Mahlkegels, eingestellt.

Bei dieser Justiertechnik ist nachteilig, dass die direkte Ablesbarkeit der Mahlstärke von außen nicht möglich ist. Weiterhin ist die Handhabung der Justierung nicht benutzerfreundlich, da eine Justierung erst durch Herumdrehen der Mühle und Justieren eines kleinen Einstellrings in einem verengten Raum am unteren Mühlenende erfolgt. Auch ist bei einer gewohnheitsgemäß aufrecht stehenden Mühle nicht erkennbar, welche Körnigkeit eingestellt ist, und ob die Mühle überhaupt über eine Justiervorrichtung verfügt.

Gemäß der Patentanmeldung US 2006/0192043 A1, die eine Vorrichtung zur kontinuierlichen Steuerung des Mahlgrads von Gewürzen in einer Mühle betrifft, erfolgt eine Justierung eines Mahlgrads eine Mahlguts mittels eines drehbar gelagerten Justierrings, welcher sich ebenfalls an einem unteren Ende bzw. Sockel eines Mühlenkörpers befindet. Der Justierring verfügt über ein Innengewinde, mit welchem eine darin vertikal geführte Hülse mit einem eingelagerten Mahlring durch eine Drehung des Justierrings eine Bewegung entlang einer axialen Richtung einer Spindel, die mit einem Mahlkegel in Wirkverbindung steht, erfährt. Durch diese über ein Gewinde bewirkte relative Bewegung zwischen dem Mahlring und dem Mahlkegel verändert sich eine Größe eines Mahlspalts und somit auch die Körnigkeit des gemahlten Mahlguts.

Nachteilig bei dieser Vorrichtung ist jedoch, dass zwischen einem Justieren der Vorrichtung und einem Mahlen von einem Benutzer eine Hand umzusetzen ist, da in dieser Vorrichtung eine Montage der Justiervorrichtung an einem unteren Ende einer Gewürzmühle vorgesehen ist. Wenn beispielsweise ein Benutzer mit seiner linken Hand den Mühlenkörper hält, kann er mit der rechten Hand entweder Mahlen oder Justieren. Beides gleichzeitig ist nicht möglich. Des Weiteren kann bei einem Befüllen der Gewürzmühle und einem Justieren des Mahlspalts Mahlgut in einen Raum zwischen dem Reservoir und dem Justierring gelangen. Dies kann die axiale Bewegung des Justierrings und damit des Mahlrings relativ zum Mahlkegel blockieren und somit zu einer Fehlfunktion der Justiereinrichtung führen. Dies führt zu einer mangelhaften Ergonomie der Vorrichtung.

Ferner offenbart die DE 10 2005 007 809 A1 eine gattungsgemäße Vorrichtung in Form einer Gewürzmühle mit einem Mahlwerk, das ein Außenmahlteil, das mit einer Drehwelle verbunden ist, und ein Innenmahlteil umfasst. Um einen Mahlgrad einzustellen, kann das Innenmahlteil in eine axiale Richtung bezüglich der Drehwelle relativ zu dem Außenmahlteil gegen eine Kraft einer Schraubenfeder bewegt werden. Dazu ist das Innenmahlteil mit einem Innenring mechanisch verbunden, wobei der Innenring mittels eines Außengewindes in ein Innengewinde eines Außenrings eingreift. Durch eine Drehung des Außenrings relativ zu einem Gehäuse der Gewürzmühle kann das Innenmahlteil axial bewegt werden. Auch diese Gewürzmühle weist den Nachteil auf, dass eine Bewegung des Innenmahlteils dadurch blockiert werden kann, dass Mahlgut zwischen das Innenmahlteil bzw. den Innenring einerseits und das Gehäuse bzw. den Außenring andererseits gelangen kann.

Schließlich offenbart die DE 20 2007 009 829 U1 eine weitere gattungsgemäße Vorrichtung in Form einer einstellbaren Gewürzmühle, die ähnlich der in der DE 10 2005 007 809 A1 offenbarten Gewürzmühle aufgebaut ist, wobei ein inneres Mahlelement über eine Drehwelle drehbar gelagert ist und ein äußeres Mahlelement in axialer Richtung der Drehwelle relativ zu dem inneren Mahlelement bewegbar ist. Dazu weist das äußere Mahlelement ein Außengewinde auf, welches in ein Innengewinde einer Manschette eingreift. Durch eine Drehung der Manschette soll das äußere Mahlelement axial bewegbar sein. Auch bei dieser Gewürzmühle ist nachteilig, das Mahlgut zwischen das äußere Mahlelement und eine Wellenhalterung, die mechanisch mit einem Gehäuse der Gewürzmühle verbunden ist, gelangen kann und so eine Bewegung des äußeren Mahlelements behindern, wenn nicht sogar vollständig blockieren kann.

### Zusammenfassung der Erfindung

Es ist somit Aufgabe der Erfindung, die gattungsgemäße Vorrichtung derart weiterzuentwickeln, dass die Nachteile des Stands der Technik überwunden werden, insbesondere ein komfortables Justieren der Körnigkeit des Mahlguts ermöglicht wird und auf konstruktiv einfache Weise verhindert wird, dass Mahlgut, einen Mechanismus zum Justieren eines Mahlgrads des Mahlguts blockieren kann.
Diese Aufgabe wird erfindungsgemäß dadurch gelöst, dass die Magazinhülse sich im wesentlichen über die gesamte Ausdehnung des Reservoirs in dem Gehäusekörper erstreckt, die zweite Mahlwerkskomponente mitnahmesicher mit der Magazinhülse und die erste Mahlwerkskomponente mitnahmesicher mit zumindest einer Achse verbunden ist und die Magazinhülse zur Veränderung zumindest einer geometrischen Abmessung des Mahlspaltes relativ zu dem Gehäusekörper bewegbar ist.

Dabei kann insbesondere vorgesehen sein, dass die zweite Mahlwerkskomponente und/oder die Magazinhülse drehmitnahmesicher mit dem Gehäusekörper zumindest indirekt verbunden ist und die erste Mahlwerkskomponente relativ zu dem Gehäusekörper, der zweiten Mahlwerkskomponente und/oder Magazinhülse drehbar gelagert.

Bei dieser Ausführungsform ist bevorzugt, dass die erste Mahlwerkskomponente mit zumindest einem Antriebselement verbindbar ist, wobei das Antriebselement zumindest eine manuell bewegbare erste Antriebseinrichtung, insbesondere in Form zumindest eines Mühlenkopfs, und/oder zumindest eine erste elektrische Antriebseinheit umfasst und/oder die erste Mahlwerkskomponente mittels zumindest einer, insbesondere durch die Achse gebildeten, Drehwelle, der Magazinhülse und/oder einer Drehhülse mit dem Antriebselement verbindbar ist.

Weiterhin kann eine erfindungsgemäße Vorrichtung zumindest eine Führungseinrichtung zur Führung der Magazinhülse relativ zu dem Gehäusekörper aufweisen, wobei die Führungseinrichtung zumindest ein erstes Führungselement und zumindest ein zweites Führungselement umfasst, wobei das erste Führungselement mit dem Gehäusekörper in Wirkverbindung steht und das zweite Führungselement mit der Magazinhülse in Wirkverbindung steht und/oder das erste Führungselement und das zweite Führungselement zumindest bereichsweise zueinander komplementäre Oberflächenformen aufweisen, und einerseits das erste Führungselement oder das zweite Führungselement zumindest einen ersten Stift, zumindest einen ersten Dorn, zumindest einen sektionierten Gewindebereich und/oder zumindest eine erste Erhebung aufweist, und andererseits das zweite Führungselement oder das erste Führungselement zumindest eine erste Ausnehmung, eine Auslassung, durch die der sektionierte Gewindebereich zumindest bereichsweise hindurchtritt, und/oder zumindest eine erste Vertiefung zur Aufnahme des ersten Dorns, des ersten Stifts, des sektionierten Gewindebereichs und/oder der ersten Erhebung aufweist, wobei die erste Ausnehmung, die Auslassung und/oder die erste Vertiefung zumindest bereichsweise entlang einer Längsachse des Gehäusekörpers verläuft, wobei der sektionierte Gewindebereich vorzugsweise in eine von der Magazinhülse und/oder der Achse umfasste Gewindevorrichtung eingreift und/oder das erste Führungselement und das zweite Führungselement eine komplementäre Oberflächenformen aufweisende Schienen-Aufnahme-Verbindung und/oder Feder-Nut-Verbindung aufweist.

Auch kann eine erfindungsgemäße Vorrichtung dadurch gekennzeichnet sein, dass die Magazinhülse und/oder die zweite Mahlwerkskomponente entlang zumindest einer Längsachse des Gehäusekörpers axial bewegbar, insbesondere mittels der Führungseinrichtung geführt, gelagert ist, wobei vorzugsweise die erste Mahlwerkskomponente an einer im wesentlichen gleich bleibenden axialen Position des Gehäusekörpers gelagert ist.

Weiterhin kann eine erfindungsgemäße Vorrichtung aufweisen zumindest eine Justiereinheit zur Einstellung einer Lage der Magazinhülse und der zweiten Mahlwerkskomponente relativ zu dem Gehäusekörper, wobei die Justiereinheit zumindest bereichsweise zwischen dem Antriebselement und dem Gehäusekörper oder innerhalb des Gehäusekörpers anordbar ist.

Bei dieser vorgenannten Ausführungsform ist bevorzugt, dass die Justiereinheit zumindest einen, insbesondere um eine Längsachse des Gehäusekörpers, der Magazinhülse und/oder der Führungshülse drehbaren, Justierring umfasst, wobei der Justierring mittels zumindest einer Verbindungsvorrichtung mit der Magazinhülse und der zweiten Mahlwerkskomponente in Wirkverbindung steht, wobei vorzugsweise die Verbindungsvorrichtung zumindest ein mit dem Justierring in Wirkverbindung stehendes, insbesondere von der Verbindungsvorrichtung umfasstes, erstes Verbindungselement und zumindest ein mit der Magazinhülse- und/oder der zweiten Mahlwerkskomponente in Wirkverbindung stehendes, insbesondere von der Magazinhülse umfasstes, zweites Verbindungselement umfasst.

Weiterhin wird hierbei vorgeschlagen, dass einerseits das erste Verbindungselement oder das zweite Verbindungselement zumindest eine zweite Vertiefung, insbesondere in Form eines ersten Gewindes und/oder eines ersten Gewindesegments, umfasst und andererseits das zweite Verbindungselement oder das erste Verbindungselement zumindest ein in die Vertiefung eingreifendes Element, insbesondere in Form zumindest eines zweiten Gewindes und/oder zweiten Gewindesegments, des zweiten Führungselementes, vorzugsweise des ersten Dorns und/oder des ersten Stifts, zumindest eines zweiten Dorns, zumindest eines zweiten Stifts und/oder zumindest einer zweiten Erhebung, umfasst, wobei vorzugsweise die Führungshülse zumindest eine zweite Ausnehmung aufweist und das erste Verbindungselement und/oder das zweite Verbindungselement zumindest bereichsweise in die zweite Ausnehmung hineinragt bzw. hineinragen und/oder zumindest bereichsweise durch die zweite Ausnehmung hindurchtritt bzw. hindurchtreten, wobei insbesondere die zweite Ausnehmung durch das erste Führungselement oder das zweite Führungselement, insbesondere die erste Ausnehmung gebildet ist.

Auch ist bevorzugt, dass die Steigung des ersten und/oder des zweiten Gewindes so angepasst und/oder veränderbar ist, dass ein maximaler Bewegungsbereich der Magazinhülse und/oder der Achse durch eine Drehung des Justierrings um 720°, bevorzugter um 540°, noch bevorzugter um 450°, mehr bevorzugter um 360° und am bevorzugtesten um weniger als 360°, insbesondere weniger als 270°oder weniger als 180°, durchfahrbar ist.

Weiterhin wird mit der Erfindung vorgeschlagen, dass die Justiereinheit zumindest ein, insbesondere mit dem Justierring in Wirkverbindung stehendes, zweites Antriebselement umfasst, wobei das zweite Antriebselement zumindest eine manuell bewegbare zweite Antriebseinrichtung und/oder zumindest eine zweite elektrische Antriebseinheit umfasst, wobei das zweite Antriebselement zumindest einen, insbesondere mit dem Justierring verbundene und/oder von dem Justierring umfassten Justierhebel und/oder Justierflügel, zumindest eine, insbesondere von dem Justierring umfasste, Oberfläche mit einer im Vergleich zu einer glatten und/oder polierten Oberfläche höheren Oberflächenrauhigkeit, vorzugsweise eine geriffelte und/oder strukturierte Oberfläche, aufweist.

Auch ist bevorzugt, dass die Justiereinheit zumindest eine Lagerungseinrichtung zur Lagerung des Justierringes umfasst, wobei insbesondere der Justierring mittels der Lagerungseinrichtung in einer im wesentlichen gleich bleibenden axialen Position entlang einer Längsachse des Gehäusekörpers, der

Magazinhülse, der Achse und/oder der Führungshülse lagerbar ist und/oder die Lagerungseinrichtung zumindest einen Fixierring, vorzugsweise zwei Fixierringe, umfasst, der bzw. die vorzugsweise von der Führungseinrichtung, insbesondere der Führungshülse, umfasst ist bzw. sind und/oder mit der Führungseinrichtung, insbesondere der Führungshülse verbunden ist bzw. sind, vorzugsweise mittels einer Klemm-, Schweiß-, Adhäsions-, Schraub, Clips- und/oder Lötverbindung, und/oder die Lagerungseinrichtung durch zueinander komplementäre Oberflächenformen einerseits der Führungseinrichtung und/oder Führungshülse und andererseits des Justierringes ausgebildet ist.

Weiterhin wird für die erfindungsgemäße Vorrichtung vorgeschlagen zumindest eine Anzeigeeinrichtung, wobei mittels der Anzeigeeinrichtung der Mahlgrad, eine Position der ersten Mahlwerkskomponente und/oder der zweiten Mahlwerkskomponente, eine Position der Magazinhülse, eine Position der Justiereinheit, eine Position des Justierringes, ein Abstand zwischen der ersten Mahlwerkskomponente und der zweiten Mahlwerkskomponente und/oder eine Größe des Mahlspalts anzeigbar ist.

Der Erfindung liegt somit die Erkenntnis zugrunde, dass aufgrund der festen Verbindung einer Magazinhülse und einer zweiten Mahlwerkskomponente, beispielsweise in Form eines Mahlrings, kein Mahlgut aus dem Magazinraum zwischen Magazinraum und zweite Mahlwerkkomponente gelangen kann und gleichzeitig dadurch, dass die Magazinhülse selber das Reservoir zur Aufnahme des Mahlguts bildet, kein Mahlgut zwischen die Magazinhülse und einen Gehäusekörper, zu dem die Magazinhülse relativ bewegbar ist, gelangen kann. Dabei ist die Magazinhülse insbesondere so dimensioniert, dass ein Kontakt zwischen einer dem Reservoir zugewandten Oberfläche des Gehäusekörpers und dem Mahlgut verhindert wird, insbesondere also das Reservoir nach unten durch das Mahlwerk, seitlich durch die Magazinhülse und nach oben durch einen das Reservoir verschließenden Deckel, der vorzugsweise durch einen mit einer Drehwelle verbindbaren Mühlenkopf gebildet wird, begrenzt ist. Durch diese konstruktive Maßnahme wird ein Blockieren einer Justiereinheit durch Mahlgut verhindert und die funktionelle Zuverlässigkeit deutlich erhöht, indem verhindert wird, dass sich Mahlgut zwischen zwei Elemente, die zur Einstellung eines Mahlgrads relativ zueinander bewegt werden, setzen kann.

Des Weiteren wird durch den erfindungsgemäßen Aufbau der Vorrichtung aufgrund der Lage der Justiereinheit an einem Mühlenkopfende ein Verstellen des Mahlgrads mit einer der beiden Hände - entweder mit der den Mühlenkörper haltenden oder mit der mahlenden Hand - möglich. Somit muss ein Mahlvorgang wegen einer Nachjustierung des Mahlgrads nicht unterbrochen werden. Bei einer erfindungsgemäßen Gewürzmühle, die zudem elektrisch betrieben ist, ist sogar eine einhändige Bedienung möglich.

Anhand einer fakultativen, von außen sichtbaren Anzeigeeinrichtung, die insbesondere eine Skala umfassen kann, kann in einer bevorzugten Ausführungsform ferner die aktuelle Einstellung des Mahlgrads problemlos abgelesen werden und man erkennt direkt und intuitiv, dass diese Mühle über eine Justierungseinheit verfügt. Damit ist die Bedienbarkeit deutlich verbessert.

In den Ansprüchen und der Beschreibung wird gefordert, dass einzelne Elemente zumindest einfach vorhanden, ausgebildet bzw. umfasst sein können. Dies schließt ein, dass die jeweiligen Elemente 1-fach und/oder mehrfach vorhanden, ausgebildet bzw. umfasst sein können.

### Kurze Beschreibung der Zeichnung

Weitere Merkmale und Vorteile der erfindungsgemäßen Gewürzmühle ergeben sich aus der folgenden detaillierten Beschreibung einer bevorzugten Ausführungsform anhand der beigefügten schematischen Zeichnungen.

Dabei zeigt:
- Figur 1: eine schematische Zeichnung eines Längsschnitts durch die Gewürzmühle,
- Figur 2: eine schematische Zeichnung des Mahlwerks,
- Figur 3: eine schematische Zeichnung der Justiereinrichtung und des Mühlenkopfes.

Wie zuvor dargelegt, betrifft die Erfindung eine Vorrichtung zum Zerkleinern eines Mahlguts, insbesondere eine Pfeffer- bzw. Gewürzmühle, mit einer Justiervorrichtung bzw. Justiereinheit, bei welcher durch Drehen eines Justierrings ein gezielter Einfluss auf einen Mahlspalt, beziehungsweise auf die Eintauchtiefe einer ersten Mahlwerkskomponente, wie eines Mahlkegels, in eine zweite Mahlwerkskomponente, insbesondere einen Mahlring, und somit letztendlich auf die Körnigkeit des Mahlguts ausgeübt werden kann.

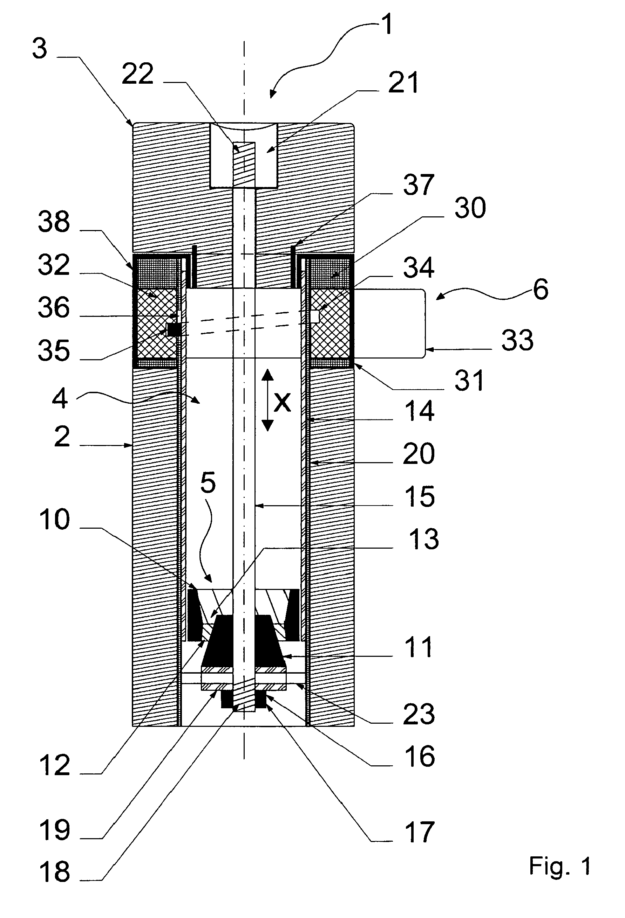

Wie Figur 1 zu entnehmen ist, umfasst eine erfindungsgemäße Vorrichtung in Form einer Gewürzmühle 1, einen Gehäusekörper in Form eines Mühlengehäuses 2, einen Mühlenkopf 3, ein Resonator für das Mahlgut in Form eines Magazinraums 4, ein Mahlwerk 5 und eine Justiereinheit 6.

### Detaillierte Beschreibung der bevorzugten Ausführungsform

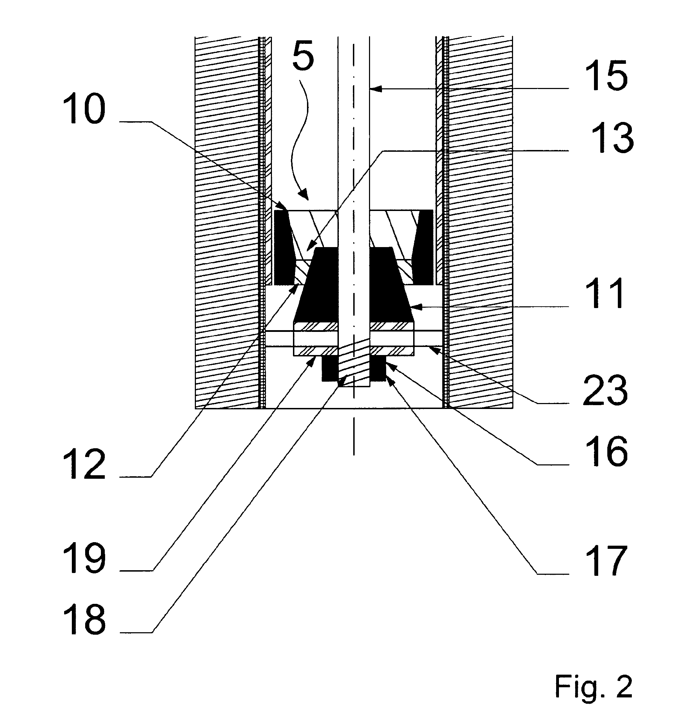

Das Mahlwerk 5 umfasst dabei eine erste und eine zweite Mahlwerkskomponente, wobei in der dargestellten Ausführungsform die zweite Mahlwerkskomponente durch einen Mahlring 10 und die erste Mahlwerkskomponente durch einen Mahlkegel 11 gebildet wird. Zwischen Mahlring 10 und Mahlkegel 11 befindet sich ein Mahlspalt 12. Eine Öffnung 13 in dem Mahlring 10 ermöglicht das Eindringen des Mahlguts in den Mahlspalt 12. Der Mahlring 10 ist mechanisch fest mit einer Magazinhülse 14 verbunden und der Mahlkegel 11 ist mit einer Drehwelle in Form einer Drehspindel 15 verbunden, die wiederum mit dem eine erste Antriebseinrichtung eines manuellen Antriebselements bildenden Mühlenkopf 3 verbunden ist. Der drehbare Mühlenkopf kann über eine nicht dargestellte Führungsvorrichtung, die insbesondere als zylindrische Vertiefung ausgebildet sein kann, die in eine obere Öffnung, Manschette oder die Magazinhülse 14 hineinragt, verfügen. Dabei kann der Mahlring 10 zumindest bereichsweise einstückig mit der Magazinhülse 14 ausgebildet sein und/oder mittels einer geeigneten Verbindung, wie durch eine Clips-, Schraub-, Steck-, Adhäsion-, Niet- und Schweißverbindung so mechanisch mit der Magazinhülse 14 verbunden sein, dass eine Bewegung der Magazinhülse 14 auf den Mahlring 10 übertragen wird. Die Drehspindel 15 ist durch eine Mutter 16 und eine Kontermutter 17, die auf ein Gewinde 18 der Drehspindel 15 aufgeschraubt sind, mit einem Drehspindellager 19 bzw. Führungsring rotationsbeweglich verbunden. In alternativen Ausführungsformen kann vorgesehen sein, dass eine Verbindung mittels einer Klemmverbindung, insbesondere umfassend einen Klemmring, der in einer Nut oder Spindel eingreift, erfolgt. Das Drehspindellager 19 enthält Öffnungen 23 zum Auslassen des gemahlenen Mahlguts und besitzt die Aufgabe den Mahlkegel 11 hinsichtlich seiner axialen Position in dem Mühlengehäuse 2 stabil zu lagern, aber seine Drehung zu ermöglichen. Des Weiteren ist die Drehspindel 15 mittels nicht dargestellter Führungsringe, die in der Magazinhülse 14 eingebracht sind, konzentrisch gelagert. Eine weitere detaillierte schematische Zeichnung des Mahlwerks 5 ist in Figur 2 abgebildet.

Die Magazinhülse 14 ist in einer Richtung entlang der Achse der Drehspindel 15 axial beweglich, d.h. in der in Figur 1 mit x bezeichneten Richtung beweglich, in einer ein erstes Führungselement einer Führungseinrichtung bildenden Führungshülse 20, die einteilig oder mehrteilig ausgebildet sein kann und je nach Ausführungsform der Gewürzmühle 1 unterschiedliche Bauteillängen aufweisen kann, gelagert. In einer alternativen Ausführungsform der Erfindung kann auch auf die Führungshülse 20 verzichtet werden. Insbesondere können die Funktionen der Führungshülse 20 mit den Funktionen des Mühlenkörpers 2 ganz oder teilweise übereinstimmen. So kann die Magazinhülse 14 direkt durch eine von dem Mühlenkörper 2 umfasste Führungseinrichtung geführt werden. Durch den ganz oder teilweisen Verzicht auf die Führungshülse 20 werden die Funktionen ganz oder teilweise von dem Mühlenkörper 2 übernommen. Umgekehrt kann die Führungshülse 20 gegebenenfalls als Träger des Mühlenkörpers 2 dienen oder selbst den Mühlenkörper 2 darstellen. Die Führungshülse 20 übernimmt dann ganz oder teilweise die Funktion des Mühlenkörpers 2, also eine statische, optische, haptische, Griffigkeits- und/oder Ergonomiefunktion. Die Führung in axialer Richtung kann in diesem Fall durch Ausbildung komplementärer Oberflächenformen der Magazinhülse 14 und des Mühlenkörpers 2 erfolgen, beispielsweise dadurch, dass der Mühlenkörper 2 und die Magazinhülse 14 aufeinander abgestimmte Einkerbungen aufweisen. Am Mühlenkopfende ist der Mühlenkopf 3 durch eine auf ein Spindelgewinde 22 aufgeschraubte Mutter 21 mit der Drehspindel 15 fixiert. Alternativ kann der Mühlenkopf 3 auch lediglich auf die Drehspindel 15 und den Mühlenkörper 2 mit einem für die Rückverankerung ausreichenden Widerstand aufgesteckt werden. Nach Entfernen der Mutter 21 und des Mühlenkopfes 3 ist die Magazinhülse 14 geöffnet und das Einfüllen von Mahlgut möglich. Die relative Lage des Mahlkegels 11 zum restlichen Mühlengehäuse 2 ist dabei primär nicht veränderlich.

Die Justiereinheit 6 am Mühlengehäuseende unterhalb des Mühlenkopfes 3 umfasst eine einen oberen Fixierring 30 und einen unteren Fixierring 31 umfassende Lagerungseinrichtung für einen Justierring 32 mit einem Justierflügel bzw. Justierhebel 33. Obwohl in der beschriebenen Ausführungsform ein Justierhebel 33 vorgesehen ist, kann in alternativen Ausbildung der Erfindung auf diesen Justierhebel verzichtet werden. So kann der Justierring 32 insbesondere eine Oberflächenstrukturierung, wie eine Riffelung, aufweisen, um eine Drehung des Justierrings 32 mittels einer Hand eines Benutzers, im Wesentlichen ohne einen Schlupf zwischen der Hand und dem Justierring 32, zu ermöglichen. Der Justierring 32 ist über eine Verbindungsvorrichtung, die ein von dem Justierring 32 umfasstes Innengewinde 34 und einen Dorn 35, der ein zweites Verbindungselement darstellt und mit der Magazinhülse 14 fest verbunden ist sowie in das Innengewinde 34 hineinragt, umfasst, mit der Magazinhülse 14 verbunden. Damit der Dorn 35 durch das Innengewinde 34 in Richtung x bewegt werden kann, ist die Führungshülse 20 an der Stelle des Dorns 35 mit einem Schlitz 36 versehen. Der Dorn 35 und der Schlitz 36 bilden ferner eine Führungseinrichtung für die Magazinhülse 14, wobei die Führungshülse 20 ein erstes Führungselement mit einer Ausnehmung in Form des Schlitzes 36 darstellt und der Dorn 35 ein zweites Führungselement repräsentiert. Ein Drehen des Justierhebels 33 mitsamt des Justierrings führt zu einer Drehbewegung des Innengewindes 34 und damit zu einer Mitnahme bzw. Bewegung des Dorns 35 entlang der x-Richtung. Somit hat das Innengewinde 34 Einfluss auf die vertikale Lage der mit dem Dorn 35 verbundenen Magazinhülse 14, die in der Führungshülse 20 gelagert ist und hierduch nur in vertikaler Richtung bewegbar ist. Eine Mitnahme der Magazinhülse 14 in axialer Richtung durch eine Drehung des Justierrings 32 kann auch alternativ dadurch erfolgen, dass der Justierring 32 lediglich ein Gewindesegment aufweist. In weiteren alternativen Ausführungsformen kann vorgesehen sein, dass der Justierring 32 ein Mitnahmeelement in Form beispielsweise eines Dorns aufweist und die Magazinhülse 14 auf ihrer Oberfläche ein Gewinde und/oder zumindest ein Gewindesegment aufweist. Die obere Öffnung der Magazinhülse 14, des Fixierrings 30 bzw. der Führungshülse 20 verfügt über eine Schutzmanschette 37, durch welche ein Eindringen von Mahlgut oder sonstigen Verunreinigungen in die Justiereinheit 6 verhindert wird.

In weiteren nicht dargestellten Ausführungsformen kann vorgesehen sein, dass sowohl der Justierring 32 als auch die Magazinhülse ein Gewinde aufweisen, die ineinander greifen, wobei vorzugsweise eines der Gewinde in den Schlitz 36 hineinragt. Insbesondere kann auch vorgesehen sein, dass die Gewinde mehr oder weniger groß ausgeführt werden und die Führung der Magazinhülse 14 durch komplementäre Oberflächen zwischen Magazinhülse 14 und Mühlengehäuse 2 bzw. Gehäusekörper und der Führungshülse 20 erfolgt. Bei den beschriebenen Ausführungsformen kann vorgesehen sein, dass der Schlitz 36 als ein Schlitz mit im Wesentlichen axialer Ausrichtung, also in Richtung x, in der Führungshülse 20 ausgebildet ist oder als in der Führungshülse 20 umlaufend ausgebildeter Schlitz ausgebildet ist, je nach dem, ob an dem Justierring 32 bzw. der Magazinhülse 14 ein Führungselement oder ein Gewinde bzw. Gewindesegment ausgebildet ist. Die Justiereinheit 6 befindet sich vorzugsweise zwischen dem zu Füllungszwecken abnehmbaren und drehbar gelagerten Mühlenkopf 3 und dem Mühlenkörper 2. Die Positionierung der Justiereinheit 6 kann jedoch auch an anderer Stelle, so z.B. mittig in der Gewürzmühle 1 erfolgen. Die Lage der Justiereinheit 6 hat keine wesentliche Abänderung des Funktionsprinzips zur Folge.

Der Justierring 32 und/oder die Fixierringe 30, 31 sind insbesondere geeignet, um auf ihrer Außenseite mit einer Blendhülse versehen zu werden. Eine derartige Blendhülse erlaubt es, eine von dem Material des Justierrings 32 und/oder den Fixierringen 30, 31 abweichende Optik bereitzustellen oder eine Markierung, wie ein Logo oder eine Skala, darzubieten. Ein Logo oder eine Skalenmarkierung kann auch auf dem Justierhebel 33 dargeboten werden.

Auf die Fixierringe 30, 31 kann ggf. verzichtet werden, wenn der Justierring 32 und die Führungshülse 20 lediglich drehbar gegeneinander miteinander verbunden sind. Dieses kann z.B. mittels horizontaler Einschlitzungen der zylindrischen Körper und dem Einbringen von Ringen oder ähnlichem erfolgen. Die Art der Befestigung der Fixierringe 30, 31 an der Führungshülse 20 ist frei wählbar. Denkbar sind beispielsweise Schraub-, Bolz-, Löt- oder Klebeverbindungen oder ähnliches. Auch kann einer der beiden Fixierringe 30, 31 ein gemeinsames Bauteil mit der Führungshülse 20 bilden. In weiteren, nicht dargestellten Ausführungsformen kann vorgesehen sein, dass auf die Führungshülse 20 verzichtet wird, wenn eine Verbindungseinrichtung den Justierring 32 drehbar mit dem Gehäusekörper 2 verbindet, und die Magazinhülse 20 dann, mittels komplementärer Oberflächen zwischen Magazinhülse 20 und Gehäusekörper 2 oder einer weiteren Verbindung zu der Führungseinrichtung, in x-Richtung geführt werden kann.

Das Innengewinde 34 des Justierrings 32 ist hinsichtlich seiner Abwicklungsbreite und Steigung einer sinnvollen Eintauchtiefe des Mahlkegels 11 in den Mahlring 10 angepasst. Ob das Innengewinde 34 links- oder rechtsläufig ist, ist hierbei nebensächlich. Beide Varianten sind möglich.

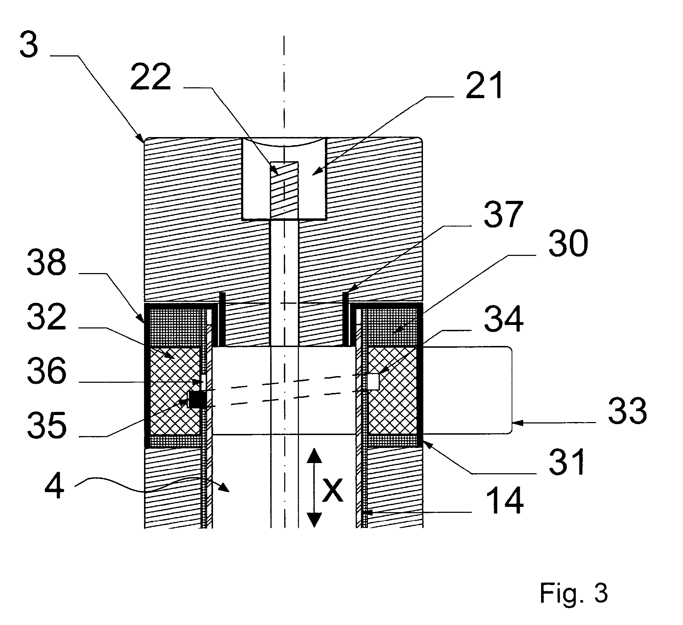

Eine weitere detaillierte Skizze des Mühlenkopfendes mit dem Mühlenkopf 3 und der Justiereinheit 6 ist in Figur 3 zu sehen.

Bei Drehen des Justierrings 32 wird der Dorn 35 durch das Innengewindes 34 parallel zu der Drehspindel 15 bewegt. Da der Dorn 35 fest mit der Magazinhülse 14 verbunden ist und wiederum der Mahlring 10 ebenfalls fest mit der Magazinhülse 14, wird durch Drehung des Justierringes 32 der Mahlring 10 abgesenkt oder angehoben und somit der Mahlspalt 12 verkleinert oder vergrößert. Der Mahlkegel 11 ist bezüglich einer Bewegung in Richtung der Drehspindel 15 fixiert. Durch Drehung des Mühlenkopfes 3 wird die Drehspindel 15 ebenfalls gedreht und dadurch auch der Mahlkegel 11, der fest mit der Drehspindel 15 verbunden ist. Insbesondere kann die Verbindung mittels Klemmringen erfolgen. Auch kann die Drehspindel 15 und der Mahlkegel 11 aufeinander abgestimmte komplementäre Oberflächen aufweisen, z.B. der Mahlkegel 11 ein Vierkantloch umfassen und die Drehspindel 15 bereichsweise als Vierkant ausgebildet sein. Durch die Drehung des Mahlkegels 11 wird das Mahlgut, das sich im Mahlspalt 12 befindet, zerkleinert. Die Körnigkeit des Mahlguts wird durch das Absenken bzw. das Anheben des Mahlrings 10 mittels des Justierrings 32 eingestellt.

Um eine eigenständige Drehung des Justierrings 32 zu verhindern und/oder eine Abstufung der Mahlgrade zu begünstigen, kann zwischen dem Justierring 32 und den Fixierringen 30, 31 oder der Führungshülse 20 eine Feststelleinrichtung, die insbesondere eine oder mehrere nicht dargestellte Rastelemente in Form von Rastglieder bildende "federnden Druckstücken" umfassen kann. Mit anderen Worten kann ein Mahlgrad entweder stufenlos, wenn keine Rasten vorhanden sind, oder in vorgegebenen Schritten einstellbar sein.

Sofern eine Raste Bestandteil der Konstruktion ist und diese sich zwischen dem Justierring 32 und einem Fixierring 30, 31 befindet, kann eine Nachjustierung der "federnden Druckstücke" über eine Bohrung in einem der Fixierringe 30, 31 vorgenommen werden.

Die jeweilige Einstellung des Mahlgrades kann anhand einer nicht dargestellten Anzeigeeinrichtung, die vorzugsweise eine Skala, welche sich vorzugsweise auf einem der Fixierringe 30, 31, dem Justierring 3 und/oder an dem Mühlenkörper 2 unterhalb des Justierringes 32 befindet, umfasst, bequem angezeigt werden. Die Skala kann auch durch die zuvor beschriebene Blendhülse bereitgestellt werden. Besonders vorteilhaft ist eine Skala, deren Darstellung weniger als 360° benötigt. Dementsprechend umfasst in diesem Fall die Drehung des Justierrings 32 von einem maximalen zu einem minimalen Mahlgrad auch weniger als 360°.

Eine Anzeigeeinrichtung kann auch dadurch realisiert sein, dass der Justierring 32, einer der Fixierringe 30, 31 oder der Mühlenkörper 20 bzw. die Führungshülse 20 eine Öffnung aufweist, die einen Blick auf zumindest ein Segment der Führungshülse 20 oder auf zumindest ein Segment der Magazinhülse 14 frei gibt. Auch kann ein Fixierring kranzartig über den Justierring herausragen, oder umgekehrt, so dass an dem Fixierring und/oder dem Justierring angeordnete Skalierungseinheiten durch eine Öffnung zumindest partiell sichtbar sein können. Vorzugsweise sind auf diesem Segment der Führungshülse 20 bzw. der Magazinhülse Markierungen aufgebracht, aus denen sich der jeweilige eingestellte Mahlgrad ergibt. Dabei wird durch die Öffnung vorzugsweise nur ein Blick auf diejenige Markierung freigegeben, der dem jeweiligen Mahlgrad entspricht.

Nach einem Befüllen der Gewürzmühle 1, indem das Mahlgut in dem Magazinraum 4 eingebracht wurde, insbesondere nachdem der Mühlenkopf 3 vom Mühlenkörper 2 abgehoben wurde, um einen Zugang zu dem Magazinraum 4 zu erhalten, wird der eigentliche Mahlvorgang dadurch bewirkt, dass der Mühlenkopf 3, gegebenenfalls nach Aufsetzen auf die Drehspindel 15 bzw. das Mühlengehäuse 2, relativ zu dem Mühlengehäuse 2 gedreht wird. Dazu wird das Mühlengehäuse 2 beispielsweise mit einer Hand gehalten und der Mühlenkopf 3 mittels der zweiten Hand gedreht. Auch kann vorgesehen sein, dass der Mühlenkopf 3 oder nur die Drehspindel 15 über ein Antriebselements, insbesondere umfassend eine Antriebseinheit, wie einen Elektromotor, gedreht wird und ein Benutzer lediglich mit der zweiten Hand oder auch mit der ersten Hand das Antriebselement betätigt, beispielsweise einen Schalter des Antriebselement betätigt. Bei Einsatz einer Antriebseinheit kann der Mühlenkopf 3 insbesondere drehsicher mit dem Mühlenkörper 2 verbunden sein und die Antriebseinheit in dem Mühlenkopf 3 angeordnet sein, um eine Bewegung der Drehspindel 15 hervorzurufen. Dies ruft eine Drehung des Mahlkegels 11 relativ zu dem Mahlring 10 hervor und bewirkt ein Mahlen des sich zwischen dem Mahlkegel 11 und dem Mahlring 10 befindlichen Mahlguts.

Wie zuvor beschrieben, erfolgt das Justieren bzw. Einstellen der Körnigkeit des Mahlguts dadurch, dass eine Drehung des Justierhebels 33 bzw. Justierrings 32 vorgenommen werden kann. Somit ist eine bequeme Einstellung des Mahlgrads möglich und die Anzeigeeinrichtung ermöglicht eine nachvollziehbare Einstellung des Mahlgrads, so dass das Mahlergebnis vorhersehbar ist.

Die in der vorstehenden Beschreibung, in den Ansprüchen sowie in den Zeichnungen offenbarten Merkmale können sowohl einzeln als auch in jeder beliebigen Kombination für die Verwirklichung der Erfindung in ihren verschiedenen Ausführungsformen wesentlich sein.

### Bauteilliste

- 1: Gewürzmühle
- 2: Mühlengehäuse
- 3: Mühlenkopf
- 4: Magazinraum
- 5: Mahlwerk
- 6: Justiereinheit
- 10: Mahlring
- 11: Mahlkegel
- 12: Mahlspalt
- 13: Öffnung
- 14: Magazinhülse
- 15: Drehspindel
- 16: Mutter
- 17: Kontermutter
- 18: Gewinde
- 19: Drehspindellager
- 20: Führungshülse
- 21: Mutter
- 22: Spindelgewinde
- 23: Öffnung
- 30: Fixierring
- 31: Fixierring
- 32: Justierring
- 33: Justierhebel
- 34: Innengewinde
- 35: Dorn
- 36: Schlitz

## Patentansprüche

1. Vorrichtung, insbesondere Mühle (1), zum Zerkleinern zumindest eines Mahlgutes, mit zumindest einem Gehäusekörper (2), einem in dem Gehäusekörper (2) ausgebildeten Reservoir (4) zur Aufnahme des zu zerkleinernden Mahlgutes, wobei das Reservoir (4) durch eine zumindest bereichsweise in dem Gehäusekörper (2) aufgenommene Magazinhülse (14) gebildet ist, und zumindest einem Mahlwerk (5) zur Zerkleinerung des Mahlgutes, wobei das Mahlwerk (5) zumindest eine erste Mahlwerkskomponente (11) und zumindest eine relativ zu der ersten Mahlwerkskomponente (11) bewegbare und durch zumindest einen Mahlspalt (12) von der ersten Mahlwerkskomponente (11) beabstandete zweite Mahlwerkskomponente (10) umfasst,
**dadurch gekennzeichnet,**
**dass** die Magazinhülse (14) sich über die gesamte Ausdehnung des Reservoirs (4) in dem Gehäusekörper (2) erstreckt, die zweite Mahlwerkskomponente (10) mitnahmesicher mit der Magazinhülse (14) und die erste Mahlwerkskomponente (11) mitnahmesicher mit zumindest einer Achse (15) verbunden ist und die Magazinhülse (14) zur Veränderung zumindest einer geometrischen Abmessung des Mahlspaltes (12) relativ zu dem Gehäusekörper (2) bewegbar ist.

2. Vorrichtung nach Anspruch 1,
**dadurch gekennzeichnet,**
**dass** die zweite Mahlwerkskomponente (10) und-die Magazinhülse (14) drehmitnahmesicher mit dem Gehäusekörper (2) zumindest indirekt verbunden ist und die erste Mahlwerkskomponente (11) relativ zu dem Gehäusekörper (2), der zweiten Mahlwerkskomponente (10) und Magazinhülse (14) drehbar gelagert ist.

3. Vorrichtung nach einem der vorangehenden Ansprüche,
**dadurch gekennzeichnet,**
**dass** die Vorrichtung zumindest eine Führungseinrichtung zur Führung der Magazinhülse (14) relativ zu dem Gehäusekörper (2) aufweist,
wobei die Führungseinrichtung zumindest ein erstes Führungselement (20) und zumindest ein zweites Führungselement umfasst, wobei das erste Führungselement (20) mit dem Gehäusekörper (2) in Wirkverbindung steht und das zweite Führungselement mit der Magazinhülse (14) in Wirkverbindung steht und/oder das erste Führungselement und das zweite Führungselement zumindest bereichsweise zueinander komplementäre Oberflächenformen aufweisen, und einerseits das erste Führungselement oder das zweite Führungselement zumindest einen ersten Stift, zumindest einen ersten Dorn (35), zumindest einen sektionierten Gewindebereich und/oder zumindest eine erste Erhebung aufweist, und andererseits das zweite Führungselement (20) oder das erste Führungselement zumindest eine erste Ausnehmung (36), eine Auslassung, durch die der sektionierte Gewindebereich zumindest bereichsweise hindurchtritt, und/oder zumindest eine erste Vertiefung zur Aufnahme des ersten Dorns (35), des ersten Stifts, des sektionierten Gewindebereichs und/oder der ersten Erhebung aufweist, wobei die erste Ausnehmung (36), die Auslassung und/oder die erste Vertiefung zumindest bereichsweise entlang einer Längsachse des Gehäusekörpers (2) verläuft, wobei der sektionierte Gewindebereich vorzugsweise in eine von der Magazinhülse (14) und/oder der Achse (15) umfasste Gewindevorrichtung eingreift und/oder das erste Führungselement und das zweite Führungselement eine komplementäre Oberflächenformen aufweisende Schienen-Aufnahme-Verbindung und/oder Feder-Nut-Verbindung aufweist.

4. Vorrichtung nach Anspruch 2 bis 3,
**dadurch gekennzeichnet,**
**dass** das erste Führungselement von dem Gehäusekörper umfasst ist und/oder das zweite Führungselement von zumindest einer Führungshülse (20) umfasst ist, wobei die Führungshülse (20) vorzugsweise mitnahmesicher mit dem Gehäusekörper (2) verbunden ist.

5. Vorrichtung nach einem der vorangehenden Ansprüche,
**dadurch gekennzeichnet,**
**dass** zumindest eine Justiereinheit (6) zur Einstellung einer Lage der Magazinhülse (14) mitnahmesicher mit der zweiten Mahlwerkskomponente (10), relativ zu dem Gehäusekörper (2), wobei die Justiereinheit (6) zwischen dem Antriebselement (3) und dem Gehäusekörper (2), oder innerhalb des Gehäusekörpers (2) angeordnet ist.

6. Vorrichtung nach einem der vorangehenden Ansprüche,
**dadurch gekennzeichnet,**
**dass** durch die Justiereinheit (6) die Magazinhülse (14) mit der zweiten Mahlwerkskomponente (10) entlang zumindest einer Längsachse (x) des Gehäusekörpers (2) axial bewegbar und mittels der Führungseinrichtung (20, 35, 36) geführt gelagert ist, wobei vorzugsweise die erste Mahlwerkskomponente (11) einer gleich bleibenden axialen Position des Gehäusekörpers (2) gelagert ist.

7. Vorrichtung nach Anspruch 5 bis6,
**dadurch gekennzeichnet,**
**dass** die Justiereinheit (6) zumindest einen um eine Längsachse des Gehäusekörpers (2), der Magazinhülse (14) und/oder der Führungshülse (20) drehbaren Justierring (32) umfasst, wobei der Justierring (32) mittels zumindest einer Verbindungsvorrichtung mit der Magazinhülse (14) mitnahmesicher mit der zweiten Mahlwerkskomponente (10)in Wirkverbindung steht, wobei die Verbindungsvorrichtung vorzugsweise zumindest ein mit dem Justierring (32) in Wirkverbindung stehendes, von der Verbindungsvorrichtung umfasstes, erstes Verbindungselement (34) und zumindest ein mit der Magazinhülse (14),mitnahmesicher mit der zweiten Mahlwerkskomponente (10) in Wirkverbindung stehendes, von der Magazinhülse (14) umfasstes, zweites Verbindungselement (35) umfasst, und einerseits das erste Verbindungselement oder das zweite Verbindungselement zumindest eine zweite Vertiefung in Form eines ersten Gewindes (34) oder eines ersten Gewindesegments, umfasst, und andererseits das zweite Verbindungselement oder das erste Verbindungselement zumindest ein in die Vertiefung eingreifendes Element,-des zweiten Führungselementes-in Form zumindest eines zweiten Gewindes oder zweiten Gewindesegments, vorzugsweise des ersten Dorns (35) oder des ersten Stifts, zumindest eines zweiten Dorns, zumindest eines zweiten Stifts oder zumindest einer zweiten Erhebung, umfasst.

8. Vorrichtung nach Anspruch 7,
**dadurch gekennzeichnet,**
**dass** vorzugsweise die Führungshülse (20) zumindest eine zweite Ausnehmung (36) aufweist und das erste Verbindungselement und/oder das zweite Verbindungselement (35) zumindest bereichsweise in die zweite Ausnehmung (36) hineinragt bzw. hineinragen oder zumindest bereichsweise durch die zweite Ausnehmung (36) hindurchtritt bzw. hindurchtreten, wobei insbesondere die zweite Ausnehmung (36) durch das erste Führungselement oder das zweite Führungselement, insbesondere die erste Ausnehmung (36) gebildet ist.

9. Vorrichtung nach Anspruch 8,
**dadurch gekennzeichnet,**
**dass** die Steigung des ersten und/oder des zweiten Gewindes (34) so angepasst oder veränderbar ist, dass ein maximaler Bewegungsbereich der Magazinhülse (14) durch eine Drehung des Justierrings (32) um 720°, bevorzugter um 540°, noch bevorzugter um 450°, mehr bevorzugter um 360° und am bevorzugtesten um weniger als 360°, insbesondere weniger als 270° oder weniger als 180°, durchfahrbar ist.

10. Vorrichtung nach einem der Ansprüche 5 bis 9,
**dadurch gekennzeichnet,**
**dass** die Justiereinheit (6) zumindest ein mit dem Justierring (32) in Wirkverbindung stehendes, zweites Antriebselement umfasst, wobei das zweite Antriebselement zumindest eine manuell bewegbare zweite Antriebseinrichtung oder zumindest eine zweite elektrische Antriebseinheit umfasst, wobei das zweite Antriebselement zumindest einen mit dem Justierring (32) verbundenen und/oder von dem Justierring (32) umfassten Justierhebel (33) und/oder Justierflügel, zumindest eine von dem Justierring (32) umfasste Oberfläche mit einer im Vergleich zu einer glatten und/oder polierten Oberfläche höheren Oberflächenrauhigkeit, vorzugsweise eine geschliffene, rauhe Oberfläche, aufweist.

11. Vorrichtung nach einem der Ansprüche 6 bis 10,
**dadurch gekennzeichnet,**
**dass** die Justiereinheit (6) zumindest eine Lagerungseinrichtung zur Lagerung des Justierringes (32) umfasst, wobei der Justierring (32) mittels der Lagerungseinrichtung in einer im wesentlichen gleich bleibenden axialen Position entlang einer Längsachse des Gehäusekörpers (2), der Magazinhülse (14), der Führungshülse (20) oder der Achse (15) lagerbar ist.

12. Vorrichtung nach Anspruch 11,
**dadurch gekennzeichnet,**
**dass** die Lagerungseinrichtung zumindest einen Fixierring (31, 32), vorzugsweise zwei Fixierringe (31, 32), umfasst, der bzw. die vorzugsweise von der Führungseinrichtung-und/oder der Führungshülse (20), umfasst ist bzw. sind und/oder mit der Führungseinrichtung und/oder der Führungshülse (20) und/oder der Achse (15) verbunden ist bzw. sind, vorzugsweise mittels einer Klemm-, Schweiß-, Adhäsions-, Schraub-, Clips- und/oder Lötverbindung.

13. Vorrichtung nach Anspruch 12,
**dadurch gekennzeichnet,**
**dass** die Lagerungseinrichtung durch zueinander komplementäre Oberflächenformen einerseits der Führungseinrichtung und/oder der Führungshülse (20) und andererseits des Justierringes (32) ausgebildet ist.
